# EUROPÄISCHE PATENTSCHRIFT

(11) **EP 2 415 125 B1**
(45) Veröffentlichungstag und Bekanntmachung des Hinweises auf die Patenterteilung: **26.12.2012**
(21) Anmeldenummer: 10703871.3
(22) Anmeldetag: 11.02.2010
(51) Int. Cl.: H01R 13/52, H01R 13/74, F16L 5/02

(54) **DICHTUNG FÜR EINE SENKRECHTE DURCHFÜHRUNG EINES GETRIEBESTECKERS**
SEAL FOR PERPENDICULAR FEED-THROUGH OF A GEARBOX PLUG
JOINT POUR LE PASSAGE VERTICAL D'UN CONNECTEUR DE TRANSMISSION

(30) Priorität: 31.03.2009 DE 102009002001
(43) Veröffentlichungstag der Anmeldung: 08.02.2012
(73) Patentinhaber: Robert Bosch GmbH, 70442 Stuttgart (DE)
(72) Erfinder: ZWEIGLE, Peter, 71254 Ditzingen (DE); ZELENY, Franco, 74354 Besigheim (DE)
(86) Internationale Anmeldenummer: PCT/EP2010/051732
(87) Internationale Veröffentlichungsnummer: WO 2010/112260

(56) Entgegenhaltungen:
- DE-A1- 19 946 133
- DE-B- 1 222 334
- DE-B4- 19 681 384
- US-A- 5 295 851

## Beschreibung

### Stand der Technik

DE 197 11 939 A1 bezieht sich auf eine Vorrichtung zur Erfassung des Drucks und der Temperatur im Saugrohr einer Brennkraftmaschine. In einem gemeinsamen Gehäuse ist ein Temperatursensor auf einem Träger zusammen mit einer Auswerteschaltung und einem weitestgehend verspannungsarm befestigten Drucksensor angeordnet. Zur Einleitung eines unter Druck stehenden Mediums ist an dem Gehäuseteil ein Stutzenteil befestigt. Ein sowohl mit dem Träger als auch mit dem Stutzenteil verbundenes Zwischenstück wird eingesetzt, welches mittels mechanischer Verspannungen entkoppelnder Dichtklebungen fixiert ist.

DE 10 2006 049 924 A1 bezieht sich auf eine Druckmessvorrichtung für Anwendungen im Kraftfahrzeug. Es wird der Druck eines fluiden Mediums erfasst, wobei die Druckmessvorrichtung mindestens eine in einer Sensorbaugruppe aufgenommene Druckmesszelle mit einem Innenrohr zur Aufnahme des Druckes des fluiden Mediums aufweist. Des Weiteren ist eine Sondenbaugruppe vorgesehen, mit einem in das fluide Medium einbringbaren Außenrohr. Das Innenrohr ragt in einen mit dem fluiden Medium in Verbindung bringbaren Druckmesskanal des Außenrohres hinein. Zwischen Innenrohr und Außenrohr ist mindestens ein Dichtring vorgesehen, dessen Material einen Fluor-Silikon-Kautschuk, insbesondere FVMQ, aufweist.

EP 1 018 788 A1 bezieht sich auf eine Gehäusedichtung für einen Steckverbinder. Der Steckverbinder umfasst zwei zusammensteckbare aus einem Einsteckteil bzw. einem Aufnahmeteil bestehende Verbinderteile. Die Gehäusedichtung weist drei dichte Lippen auf und ist im Querschnitt als ebenes strichförmiges Dichtelement beschaffen. Zur Abdichtung des Bereiches zwischen den beiden zusammensteckbaren Verbinderteilen ist eine der Dichtlippen in Steckrichtung zwischen den beiden Verbinderteilen eingeklemmt, die beiden anderen Dichtlippen befinden sich innerhalb des Aufnahmeteiles.

US 5,295,851 offenbart eine Abdichtung gemäß dem Oberbegriff Anspruchs 1.

Bei Automatikgetrieben, insbesondere zur Anwendung im Automobilbereich, können die elektrischen Steuerungsmodule innerhalb des Getriebegehäuses angeordnet werden. Deren elektrischer Anschluss ist dann durch das Getriebegehäuse nach außen zu führen. Die Durchführung des Steckers muss auch bei durch Temperaturunterschiede hervorgehobenen positiven oder negativen Druckdifferenzen wasser- und öldicht sein. Bei senkrecht eingebauten Steckern ist eine Spritzwasseransammlung oberhalb der Dichtstelle zu vermeiden, damit beim Abkühlen des Getriebes keine Flüssigkeit eingesaugt werden kann.

Bei bisher an Getrieben, sei es an Automatikgetrieben oder an Handschaltgetrieben, eingesetzten Dichtungen werden Dichtmuffen eingesetzt, um Positioniertoleranzen des Steckers auszugleichen. Die Dichtmuffe umfasst einen starren Führungsteil, der z.B. als metallisches Tiefziehteil oder als Kunststoffspritzgussbauteil beschaffen sein kann und ein elastisch ausgebildetes Dichtelement. Bei senkrechter Steckeranordnung erzeugt die Führung der Dichtmuffe einen unerwünschten, ringförmig verlaufenden Hohlraum oberhalb der Dichtung, in dem Spritzwasser stehen bleiben kann. Wird auf die Führung der Dichtmuffe verzichtet, kann dieser Hohlraum, in dem sich Spritzwasser ansammelt, zwar minimiert werden, doch ist die Führung der Dichtmuffe ausschließlich über ein aus elastischem Material bestehendes Dichtbauteil ungenügend.

### Offenbarung der Erfindung

Der erfindungsgemäß vorgeschlagenen Lösung folgend, wird eine Abdichtung für eine senkrechte Steckerdurchführung durch ein Gehäuse vorgeschlagen, welche ein Führungsteil aufweist, welches Teil des abzudichtenden Gehäuses ist und das mit einem Dichtteil zusammen wirkt, welches aus einem elastischen Material, so z.B. einem Kunststoff oder aus Gummi gefertigt ist.

Bei der erfindungsgemäß vorgeschlagenen Abdichtung für eine senkrechte Steckerdurchführung handelt es sich bevorzugt um eine Zweikomponentenbauweise aufweisende Baugruppe. Die eine Komponente wird durch einen angeformten Kragen, der in vorteilhafter Weise am abzudichtenden Gehäuse selbst ausgebildet ist, dargestellt, während die andere Komponente der Baugruppe durch ein aus elastischem Material gefertigtes Dichtelement, welches muffenförmig ausgebildet ist, gegeben ist. In besonders bevorzugter Ausführungsweise ist eine Stirnseite des Kragens, der im Gehäuse ausgebildet ist, mit einer Inneneinzelsegmentierung ausgebildet. Dies bedeutet, dass entlang des Umfangs der abzudichtenden Öffnung eine Anzahl von klauenförmig ausgebildeten Übergriffen ausgebildet ist, zwischen denen jeweils ein Zwischenraum freigelassen ist. Korrespondierend zur Teilung der klauenförmigen Übergriffe am Kragen am Umfang der abzudichtenden Öffnungen sind an den in dieser abzudichtenden Öffnung einzulassende Dichtmuffen mit ausgebildetem Dichtelement Freiräume ausgebildet, die von den Klauen des Führungsteiles am Kragen des Gehäuses übergriffen werden. Andererseits weist das aus elastischem Material gefertigte muffenförmig ausgebildete Dichtteil einzelne Vorsprünge auf, die in die Freiräume zwischen den klauenförmigen Übergriffen, die am Kragenteil ausgebildet sind, hineinragen. Diese Vorsprünge am Dichtteil dienen als Haltesegmente und sind ebenfalls in einer Einzelsegmentierung in Bezug auf den Umfang des Dichtteiles ausgebildet, der zur Teilung der Einzelsegmente des Kragenteiles des Gehäuses korrespondiert.

In besonders bevorzugter Ausführungsform bilden das Dichtteil und der Kragen im Bereich der abzudichtenden Öffnung zwei Anlageflächen. Eine Anlagefläche erstreckt sich in radiale Richtung unterhalb des Kragens zwischen der Oberseite eines angeschraubten Randes am aus elastischen Material gefertigten Dichtelement, während die andere sich in axiale Richtung in Bezug auf die abzudichtende Öffnung erstreckt und durch die Innenseite des Kragens und die Außenseite des muffenförmig ausgebildeten Dichtteiles gegeben ist. Sowohl an der Innenseite als auch im Bereich des angeformten Randes des muffenförmig ausgebildeten Dichtteiles können ein oder mehrere Dichtlippen in Umfangsrichtung verlaufen.

In besonders bevorzugter Ausführungsform befindet sich an der höchstgelegenen Stelle des muffenförmig ausgebildeten Dichtteiles eine umlaufend ausgebildete Dichtlippe. Diese Dichtlippe hat ein im Wesentlichen dreieckförmiges Profil und weist im Bezug auf die Stirnseite des Dichtelementes eine Anschrägung auf, die ein Gefälle in radiale Richtung nach außen erzeugt. Aufgrund dieser Schräge bzw. des sich einstellenden Gefälles auf der Oberseite des im Wesentlichen dreieckförmig profilierten Dichtelementes kann Spritzwasser in radiale Richtung nach außen durch die Zwischenräume zwischen den klauenförmigen Übergriffen, den Haltesegmenten des übergriffenen Dichtelementes abgeleitet werden, so dass dieses nicht auf der Stirnseite des Dichtelementes stehen bleibt und beim Abkühlen des Getriebes in das Innere des abzudichtenden Getriebegehäuses eingesaugt wird.

Die erfindungsgemäß vorgeschlagene Lösung vermeidet einen Aufbau von Stauwasser auf der Stirnseite des Dichtteiles, da dieses durch die Zwischenräume am Umfang der Abdichtung der senkrechten Steckführung radial nach außen abgeleitet wird.

Die in alternierender Abfolge ausgebildeten klauenförmigen Übergriffe am Randbereich der abzudichtenden Öffnungen im Zusammenspiel mit der in dazu korrespondierender Teilung ausgebildeten Haltesegmente am Umfang des Dichtteiles sorgen beim Einbau des Dichtteiles in der abzudichtenden Öffnung und bei den auftretenden Druckwechseln aufgrund der Temperaturänderung des abzudichtenden Gehäuses für eine sichere Positionierung der Dichtung.

Während in einer ersten Ausführungsvariante die Dichtlippe umlaufend sein kann, was eine einfachere Werkzeuggestaltung zur Herstellung derselben ermöglicht, kann in einer weiteren vorteilhaften Ausführungsvariante die Dichtlippe in alternierender Reihenfolge, d.h. in alternierender Segmentierung ausgebildet sein. Dies bedeutet, dass in Umfangsrichtung der abzudichtenden Öffnung gesehen, die Abdichtung durch ein in alternierender Reihenfolge aufeinander folgende Ausnehmungen und Vorsprünge gebildet wird, wobei die Teilung in diesem Falle der Teilung der klauenförmigen Übergriffe am Randbereich des Kragens entspricht. Bei dieser zweiten vorteilhaften Ausführungsvariante entsteht eine optimierte Form des Dichtteiles für einen Abfluss von Spritzwasser in radiale Richtung.

### Kurze Beschreibung der Zeichnung

Die Erfindung wird nachstehend anhand der Zeichnungen eingehend erläutert.

Es zeigt
- Figur 1: eine perspektivische Draufsicht auf die Abdichtung für eine senkrechte Steckerdurchführung an einem Gehäuse,
- Figur 2: eine Darstellung in vergrößertem Maßstab von Führungsteil und Dichtteil mit sich ergebenden Anlageflächen,
- Figur 3: einen größeren perspektivischen Ausschnitt des Dichtteiles, eingelassen in die abzudichtende Öffnung,
- Figur 4: eine erste Ausführungsvariante der umlaufenden Dichtlippe am Dichtteil und
- Figur 5: die Dichtlippe am Dichtteil ausgebildet in einer alternierenden Segmentierung.

### Ausführungsformen

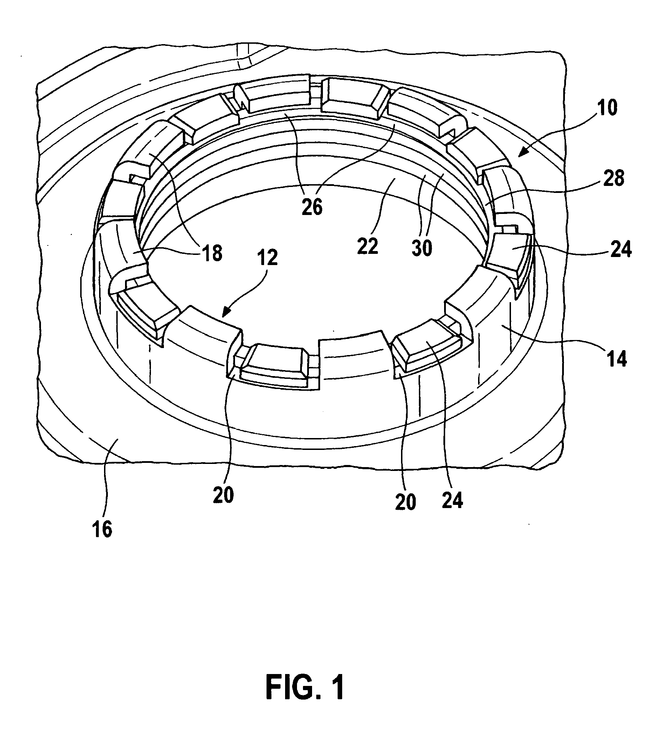

Der Darstellung gemäß Figur 1 ist eine Abdichtung zu entnehmen, die zur Abdichtung eines Gehäuses gegen Wassereintritt und Ölaustritt oder dergleichen dient.

Eine Abdichtung 10, die insbesondere für eine senkrechte Steckerführung für eine elektrische Kontaktierung innerhalb eines Gehäuses 16 liegende Komponenten dient, umfasst ein Führungsteil 12. Das Führungsteil 12 ist Teil eines Gehäuses 16 und wird durch einen Kragen 14 gebildet. Der Kragen 14, der im nahezu rechten Winkel in Bezug auf die Planfläche des Gehäuses 16 von diesem absteht, umfasst in Umfangsrichtung einer abzudichtenden Öffnung gesehen eine Anzahl von Haltesegmenten 18. In Umfangsrichtung der abzudichtenden Öffnung gesehen sind die Haltesegmente 18 in alternierender Reihenfolge angeordnet, d.h. zwischen zwei benachbart zueinander angeordneten Haltesegmenten 18 liegt eine Aussparung 20 am Umfang der abzudichtenden Öffnung des Kragens 14.

In die den Kragen 14, der als Führungsteil 12 dient, ist ein Dichtteil 22 eingelassen, welches bevorzugt aus einem elastische Eigenschaften aufweisenden Material gefertigt ist.

Auch an der Stirnseite des aus elastischem Material gefertigten Dichtteiles 22 befinden sich Haltesegmente 24, die in alternierender Abfolge in Umfangsrichtung 56 gesehen zur Aussparung 26 angeformt sind. Bei der Montage des elastische Eigenschaften aufweisenden Dichtteiles 22 ergibt sich das in Figur 1 dargestellte Muster von in jeweilige Aussparungen 20 bzw. 26 eingreifende Haltesegmente 18 bzw. 24.

Wie aus der perspektivischen Draufsicht gemäß Figur 1 zudem hervorgeht, liegen die einzelnen Flanken der Haltesegmente 18 sowohl des Kragens 14 als auch der Haltesegmente 24, die an der Stirnseite des Dichtteiles 22 ausgebildet sind, nicht flächig aneinander an, sondern weisen in Bezug aufeinander kleine rinnenförmige Ausnehmungen auf. Bezugszeichen 28 bezeichnet eine in der perspektivischen Ansicht gemäß Figur 1 umlaufend ausgebildete Dichtlippe, die sich an der Stirnseite des Dichtteiles 22 unterhalb der Aussparungen 26 bzw. der Haltesegmente 24, die am Dichtteil 22 ausgebildet sind, befindet.

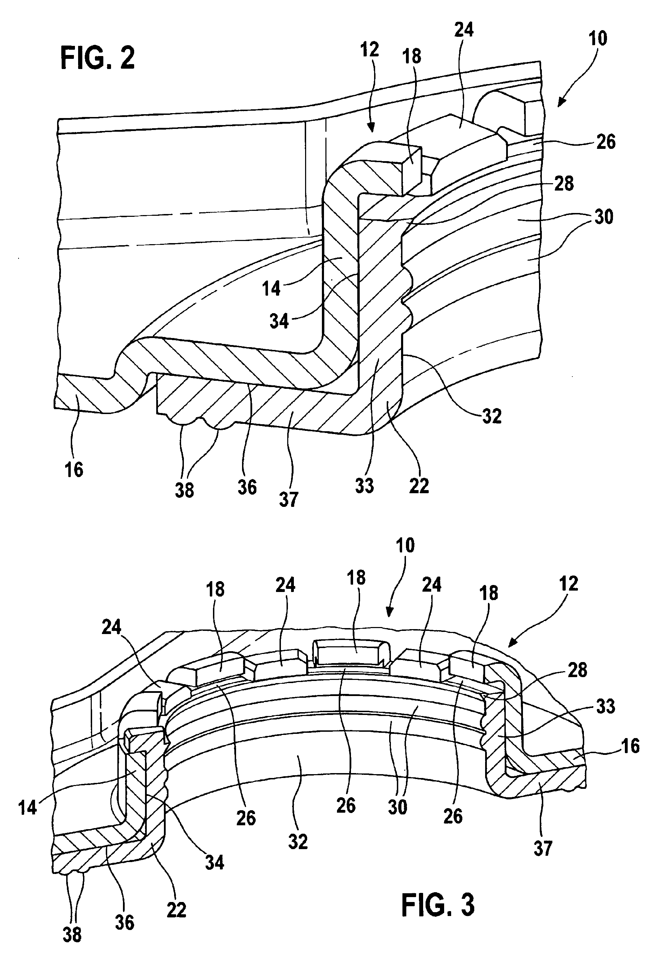

Der Darstellung gemäß Figur 2 ist ein in vergrößertem Maßstab dargestelltes Detail der erfindungsgemäß vorgeschlagenen Abdichtung zu entnehmen.

Aus der Darstellung gemäß Figur 2 geht hervor, dass das Dichtteil 22 mindestens eine in Umfangsrichtung 56 verlaufende Dichtlippe 28 aufweist. Diese erstreckt sich an der Stirnseite eines axialen Hülsenansatzes 33, an dessen Innenseite 32 in der Darstellung gemäß Figur 2 zwei übereinander liegend angeordnete Wülste 30 ausgebildet sind. Der axiale Hülsenansatz 33 des aus elastischem Material gefertigten Dichtteiles 22 geht in einen angeformten Rand 37 über. An der Unterseite des angeformten Randes 37 des Dichtteiles 22 aus einem elastische Eigenschaften aufweisenden Material erstrecken sich zwei konzentrisch ausgebildete Auflagewülste 38.

Aus der in Figur 2 dargestellten Einbaulage des Dichtteiles 22 in das Führungsteil 12 geht hervor, dass sich zwischen dem axialen Hülsenansatz 33 bzw. dessen Außenmantelfläche und der Innenseite des Kragens 14 eine erste Anlagefläche 34 ergibt, die eine Abdichtfunktion erfüllt, und des weiteren eine zweite Anlagefläche 36 durch die Unterseite des hier plan ausgebildeten Gehäuses 16 und die Oberseite des am Dichtteil 22 angeformten Randes 37 entsteht.

Die perspektivische Ansicht gemäß Figur 2 zeigt zudem, dass die Haltesegmente 18 des Kragens 14 in Aussparungen 26 des Dichtteiles 22 eingreifen, während die Haltesegmente 24 des Dichtteiles 22, in die entsprechend konfigurierten Aussparungen 20, die am Kragen 14 ausgebildet sind, eingreifen. Bei dem Gehäuse 16 gemäß der Darstellung in Figur 2 kann es sich sowohl um ein aus metallischem Material gefertigtes Tiefziehteil als auch um ein Kunststoffgehäuse handeln.

Figur 3 ist ein Halbschnitt durch die perspektivische Ansicht der senkrechten Steckerdurchführung gemäß Figur 1 zu entnehmen.

Aus der Darstellung gemäß Figur 3 geht hervor, dass die Dichtlippe 28, die in der Ausführungsvariante gemäß Figur 3 umlaufend ausgebildet ist, sich an der Innenseite 32 des axialen Hülsenansatzes 33 befindet und oberhalb von zwei übereinander liegenden Wülsten 30 an der Innenseite 32 des axialen Hülsenansatzes 33 des Dichtteiles 22 verläuft. Aus der Darstellung gemäß Figur 3 geht besonders instruktiv hervor, wie die Haltesegmente 18 des Kragens 14 in korrespondierend ausgebildete Aussparungen 26 des Dichtteiles 22 eingreifen, so dass sich eine Überdeckung und damit eine Fixierung des Dichtteiles 22 ergibt, wobei jedoch zwischen den nebeneinander liegend angeordneten Haltesegmenten 18 des Kragens 14 und den Haltesegmenten 24 des Dichtteiles 22 kleine Freiräume verbleiben, die sich in radiale Richtung erstrecken. Mit Bezugszeichen 34 ist in der Darstellung gemäß Figur 3 die erste Anlagefläche bezeichnet, während Bezugszeichen 36 die zweite Anlagefläche zwischen dem Gehäuse 16 und dem angeformten Rand 37 des Dichtteiles 22 bezeichnet.

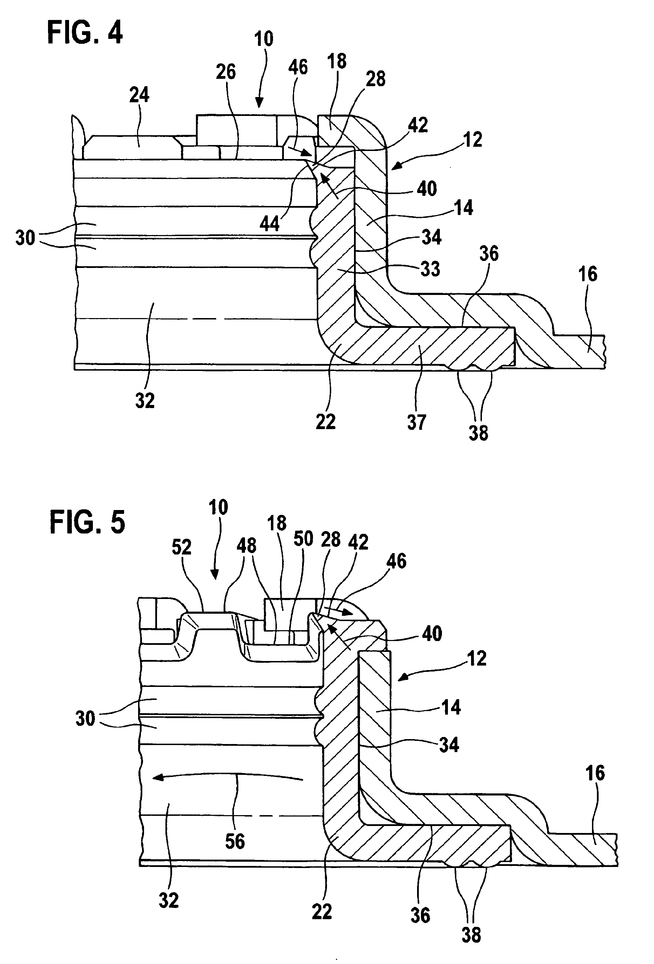

Aus der Darstellung gemäß Figur 4 geht in perspektivischer Wiedergabe eine erste Ausführungsform des Dichtteiles 22 hervor.

Wie Figur 4 zeigt, weist die in dieser Ausführungsvariante umlaufend ausgebildete Dichtlippe 28 ein im Wesentlichen dreieckförmiges Profil 44 aus. Die spitz radial nach innen auslaufende Spitze des Dreieckes ist in Bezug auf die Stirnseite des axialen Hülsenansatzes 33 angestellt, d.h. liegt höher als die Stirnseite, so dass sich eine Schräge 42 ergibt, die ein Gefälle radial nach außen aufweist. Dadurch wird im montierten Zustand der Abdichtung 10 sich auf der Stirnseite bzw. der Schräge 42 ansammelndes Wasser radial nach außen geführt und kann durch die Zwischenräume zwischen den aneinander angrenzenden Haltesegmenten 18 des Kragens 14 bzw. der Haltesegmente 24 des Dichtteiles 22 in radiale Richtung in Abflussrichtung 46 nach außen auf das Gehäuse 16 abfließen. Dadurch wird wirkungsvoll verhindert, dass eine Spritzwasseransammlung auf der Oberseite der Abdichtung 10 entsteht, die beim Abkühlen des Gehäuses 16, z.B. eines Getriebegehäuses, ein Einsaugen dieses Spritzwassers in das Getriebe ermöglichen würde, was unbedingt zu vermeiden ist, um die Eigenschaften des Getriebefluides nicht zu beeinträchtigen.

Ebenso ist der Darstellung gemäß Figur 4 zu entnehmen, dass im montierten Zustand des Dichtteiles 22 zwischen der Mantelfläche des axialen Hülsenansatzes 33 und der Innenseite des Kragens 14 die erste Anlagefläche 34 entsteht, während die zweite Anlagefläche 36 zwischen der Oberseite des angeformten Randes 37 des Dichtteiles 22 und der Unterseite der plan ausgebildeten Begrenzungsfläche des Gehäuses 16 entsteht.

Durch Bezugszeichen 40 ist die Anstellung der in der Darstellung gemäß Figur 4 umlaufend ausgebildeten Dichtlippe 28 in vertikaler Richtung angedeutet, so dass die Schräge 42 entsteht, die schlussendlich das Abfließen von angesammeltem Spritzwasser ermöglicht.

Der Darstellung gemäß 5 ist eine weitere Ausführungsform der Abdichtung 10 zu entnehmen, bei der die umlaufende Dichtlippe 28 eine alternierende Segmentierung 48 aufweist. Die alternierende Segmentierung 48 ist dadurch gegeben, dass in Umfangsrichtung 56 des Dichtteiles 22 gesehen ein Vorsprung 52 auf eine Ausnehmung 50 folgt. Die Vorsprünge 52 weisen analog zur umlaufenden Dichtlippe 28 gemäß der ersten Ausführungsform in Figur 4 eine Anstellung 40 auf, so dass Spritzwasser in radiale Richtung nach außen entsprechend der Abflussrichtung 46 auf das Gehäuse 16 bzw. die unterhalb des Kragens 14 liegende Fläche abläuft. Zwischen den einzelnen eine Neigung bzw. Schräge 42 aufweisenden Vorsprünge 52 verlaufen Ausnehmungen 50, die im Bereich von Aussparungen 20 des Kragens 14 liegen.

Während bei der in Figur 4 dargestellten Ausführungsvariante bei Ausbildung einer umlaufenden Dichtlippe 28 eine besonders einfache Werkzeuggestaltung erreicht werden kann, weist die in Figur 5 wiedergegebene komplexere Geometrie der mindestens einen Dichtlippe 28 am Dichtteil 22 den Vorteil auf, das eine optimierte Form hinsichtlich des Abwasserabflusses erreicht wird.

Bei den in den Figuren 1, 2 und 3 dargestellten alternierend angeordneten Haltesegmenten 18 des Kragens 14 am Führungsteil 12 beziehungsweise 24 im Bezug auf das Dichtteil 22 wird eine sichere Positionierung der Abdichtung 10 beim Einbau in das Gehäuse 16 sowie bei auftretenden Druckwechseln im Gehäuse 16 erreicht.

## Patentansprüche

1. Abdichtung (10) für eine senkrechte Steckerdurchführung für eine elektrische Kontaktierung mindestens eines innerhalb eines Gehäuses (16) angeordneten Steuergerätes, mit einem Dichtteil (22), welches mindestens eine Dichtlippe (28) aufweist und welches von einem Führungsteil (12) umgeben ist, **dadurch gekennzeichnet, dass** am Dichtteil (22) mindestens eine Dichtlippe (28) umlaufend oder in alternierender Segmentierung (48) ausgeführt ist, die eine radial nach außen abfallende Schräge (40, 42) bildet.

2. Abdichtung (10) gemäß Anspruch 1, **dadurch gekennzeichnet, dass** die mindestens eine Dichtlippe (28) an einer Stirnseite einer Innenseite (32) eines axialen Hülsenansatzes (33) des Dichtteiles (22) angeformt ist.

3. Abdichtung (10) gemäß Anspruch 1, **dadurch gekennzeichnet, dass** die alternierende Segmentierung (48) der Dichtlippe (28) durch in Umfangsrichtung (56) alternierend angeordnete Ausnehmung (50) und Vorsprünge (52) gebildet ist.

4. Abdichtung (10) gemäß Anspruch 1, **dadurch gekennzeichnet, dass** das Führungsteil (12) und das Dichtteil (22) jeweils in alternierender Reihenfolge in Umfangsrichtung (56) gesehen angeordnete Haltesegmente (18, 24) und Aussparungen (20, 26) aufweisen.

5. Abdichtung (10) gemäß Anspruch 1, **dadurch gekennzeichnet, dass** die Dichtlippe (28) ein im Wesentlichen dreieckförmiges Profil (44) aufweist.

6. Abdichtung (10) gemäß Anspruch 1, **dadurch gekennzeichnet, dass** die Dichtlippe (28) in Bezug auf die Stirnseite der Innenwand (32) des axialen Hülsenansatzes (33) schräg angestellt (40) verläuft.

7. Abdichtung (10) gemäß Anspruch 1, **dadurch gekennzeichnet, dass** das Dichtteil (22) an der Innenseite (32) mindestens einen Wulst (30) und an einem angeformten Rand (37) mindestens einen Auflagewulst (38) umfasst.

8. Abdichtung (10) gemäß Anspruch 1, **dadurch gekennzeichnet, dass** zwischen einer Innenseite eines Kragens (14), des Führungsteiles (12) und dem hülsenförmigen Ansatz (33) eine erste Anlagefläche 34 gebildet ist.

9. Abdichtung (10) gemäß Anspruch 7, **dadurch gekennzeichnet, dass** zwischen dem Gehäuse (16) unterhalb des Kragens (14), des Führungsteiles (12) und dem angeformten Rand (34) eine zweite Anlagefläche (36) gebildet ist.

10. Verwendung der Abdichtung (10) gemäß einem oder mehrerer der Ansprüche 1 - 9 zur Abdichtung einer senkrechten Steckerdurchführung an einem Gehäuse (16), insbesondere einem Getriebegehäuse eines automatischen Fahrzeuggetriebes.

## Claims

1. Seal (10) for a vertical plug leadthrough for electrical contacting of at least one control apparatus arranged inside a housing (16), with a sealing part (22) which has at least one sealing lip (28) and which is surrounded by a guide part (12), **characterized in that** at least one sealing lip (28) is formed on the sealing part (22) continuously or in alternating segmentation (48) and constitutes a slope (40, 42) descending radially outwards.

2. Seal (10) according to Claim 1, **characterized in that** the at least one sealing lip (28) is integrally formed on an inner side (32) of an axial sleeve extension (33) of the sealing part (22).

3. Seal (10) according to Claim 1, **characterized in that** the alternating segmentation (48) of the sealing lip (28) is formed by a recess (50) and projections (52) arranged in alternation in the circumferential direction (56).

4. Seal (10) according to Claim 1, **characterized in that** the guide part (12) and sealing part (22) have in each case holding segments (18, 24) and clearances (20, 26) which are arranged in alternating sequence, as seen in the circumferential direction (56).

5. Seal (10) according to Claim 1, **characterized in that** the sealing lip (28) has an essentially triangular profile (44).

6. Seal (10) according to Claim 1, **characterized in that** the sealing lip (28) runs at an oblique incidence (40) with respect to the end face of the inner wall (32) of the axial sleeve extension (33).

7. Seal (10) according to Claim 1, **characterized in that** the sealing part (22) comprises on the inner side (32) at least one bead (30) and at an integrally formed margin (37) at least one supporting bead (38).

8. Seal (10) according to Claim 1, **characterized in that** a first bearing surface (34) is formed between an inner side of a collar (14) of the guide part (12) and the sleeve-shaped extension (33).

9. Seal (10) according to Claim 7, **characterized in that** a second bearing surface (36) is formed between the housing (16), below the collar (14) of the guide part (12), and the integrally formed margin (34).

10. Use of the seal (10) according to one or more of Claims 1 - 9 for sealing off a vertical plug leadthrough on a housing (16), in particular a gearbox housing of an automatic vehicle transmission.

## Revendications

1. Joint d'étanchéité (10) pour un passage perpendiculaire d'un connecteur pour une mise en contact électrique d'au moins un appareil de commande disposé à l'intérieur d'un boîtier (16), comprenant une partie d'étanchéité (22) qui comprend au moins une lèvre d'étanchéité (28) et qui est entourée par une partie de guidage (12), **caractérisé en ce qu'**au moins une lèvre d'étanchéité (28) est réalisée sur la partie d'étanchéité (22) de manière périphérique ou suivant une segmentation alternée (48), laquelle lèvre d'étanchéité forme un biseau (40, 42) descendant radialement vers l'extérieur.

2. Joint d'étanchéité (10) selon la revendication 1, **caractérisé en ce que** l'au moins une lèvre d'étanchéité (28) est formée sur un côté frontal d'un côté intérieur (32) d'un prolongement en forme de douille (33) de la partie d'étanchéité (22).

3. Joint d'étanchéité (10) selon la revendication 1, **caractérisé en ce que** la segmentation alternée (48) de la lèvre d'étanchéité (28) est formée par des creux (50) et saillies (52) disposés en alternance dans la direction périphérique (56).

4. Joint d'étanchéité (10) selon la revendication 1, **caractérisé en ce que** la partie de guidage (12) et la partie d'étanchéité (22) comprennent des segments de retenue (18, 24) et des évidements (20, 26) disposés respectivement en séquence alternée vu dans la direction périphérique (56).

5. Joint d'étanchéité (10) selon la revendication 1, **caractérisé en ce que** la lèvre d'étanchéité (28) présente un profil (44) essentiellement triangulaire.

6. Joint d'étanchéité (10) selon la revendication 1, **caractérisé en ce que** la lèvre d'étanchéité (28) s'étend de manière inclinée (40) par rapport au côté frontal de la paroi intérieure (32) du prolongement axial en forme de douille (33).

7. Joint d'étanchéité (10) selon la revendication 1, **caractérisé en ce que** la partie d'étanchéité (22) comporte sur le côté intérieur (32) au moins un bourrelet (30) et sur un bord façonné (37) au moins un bourrelet d'appui (38).

8. Joint d'étanchéité (10) selon la revendication 1, **caractérisé en ce qu'**une première surface d'appui (34) est formée entre un côté intérieur d'une collerette (14) de la partie de guidage (12) et le prolongement en forme de douille (33).

9. Joint d'étanchéité (10) selon la revendication 7, **caractérisé en ce qu'**une deuxième surface d'appui (36) est formée entre le boîtier (16) en dessous de la collerette (14) de la partie de guidage (12) et le bord façonné (34).

10. Utilisation du joint d'étanchéité (10) selon l'une quelconque ou plusieurs des revendications 1 à 9 pour l'étanchéification d'un passage perpendiculaire d'un connecteur sur un boîtier (16), en particulier un boîtier de transmission d'une transmission automatique de véhicule.
